# EUROPEAN PATENT APPLICATION

(11) **EP 2 572 870 A1**
(43) Date of publication of application: **27.03.2013**
(21) Application number: 12185692.6
(22) Date of filing: 24.09.2012
(51) Int. Cl.: B29C 70/86

(54) **Composite aerospace structure with integrated conveyance element**

(30) Priority: 26.09.2011 US 201113245153
(71) Applicant: Hamilton Sundstrand Corporation, Windsor Locks, CT 06096-1010 (US)
(72) Inventor: Seger, Mark J., Rockford, IL Illinois 61108 (US); Krenz, Michael, Roscoe, IL Illinois 61073 (US); Dyer, Gerald P., Enfield, CT Connecticut 06082-5756 (US)
(74) Representative: Hull, James Edward

(57) **Abstract**

A composite structure (10) for aerospace applications includes a structural member (11) having multiple composite layers (12) providing a longitudinally extending cavity (13). A conveyance element (14) is arranged between and integral with the layers (12). In one example, the structural member (11) provides a gas turbine engine duct (30) or an airframe component (37). A composite structural assembly is manufactured by providing a first composite layer (12) on a form that corresponds to a cavity (13). A second form, which may be a conveyance element (14) in one example, is positioned along the first layer (12). A second composite layer (12) is laid onto the second form and the first composite layer (12) to provide a composite structural member (10) with an integrated conveyance element (14).

## Description

### BACKGROUND

This disclosure relates to a composite aerospace structure with an integrated conveyance element. More particularly, the disclosure relates to a composite engine housing or airframe component with integrated wiring, air ducting or conduits.

Aerospace applications have increasingly used composite materials for components such as gas turbine engines and airframe structures. The composite structure provides a structural member defining a cavity. Subsequent to the composite structures manufacture, other components are arranged in the cavity. Typically, multiple conveyance elements are secured external to the composite structure to convey electricity, hydraulic fluid, or air, for example. The external wiring harnesses and conduits require brackets and fasteners to secure the components to the composite structure. Additional components may be also mounted on the composite structure and connected to these conveyance elements.

### SUMMARY

A composite structure for aerospace applications includes a structural member having multiple composite layers providing a longitudinally extending cavity. A conveyance element is arranged between and integral with the layers. In one example, the structural member provides a gas turbine engine duct or an airframe component.

A composite structural assembly may be manufactured by providing a first composite layer on a form that corresponds to a cavity. A second form, which may be a conveyance element in one example, is positioned along the first layer. A second composite layer is laid onto the second form and the first composite layer to provide a composite structural member with an integrated conveyance element.

### BRIEF DESCRIPTION OF THE DRAWINGS

The disclosure can be further understood by reference to the following detailed description when considered in connection with the accompanying drawings wherein:
Figure 1 is a schematic view of an example composite structure according to this disclosure.
Figure 2 is a schematic of a gas turbine engine incorporating a composite engine duct.
Figure 3 is a perspective view of an example engine duct according to the disclosure.
Figure 4 is a cross-sectional view of the engine duct illustrated in Figure 3 taken long line 4-4.
Figure 5 is partial cross-sectional view of a portion of the engine duct illustrated in Figure 3 and having a conveyance element secured to a connector mounted on the engine duct.
Figure 6 is a schematic cross-sectional view of an airframe.
Figure 7 is a cross-sectional view of a composite fuselage having a wire as a conveyance element.
Figure 8 is a cross-sectional view of a fuselage having an air duct as a conveyance element.
Figure 9 is a cross-sectional view of a fuselage having a conduit as a conveyance element.
Figure 10 is an illustration of a method of manufacturing a composite structural assembly.

### DETAILED DESCRIPTION

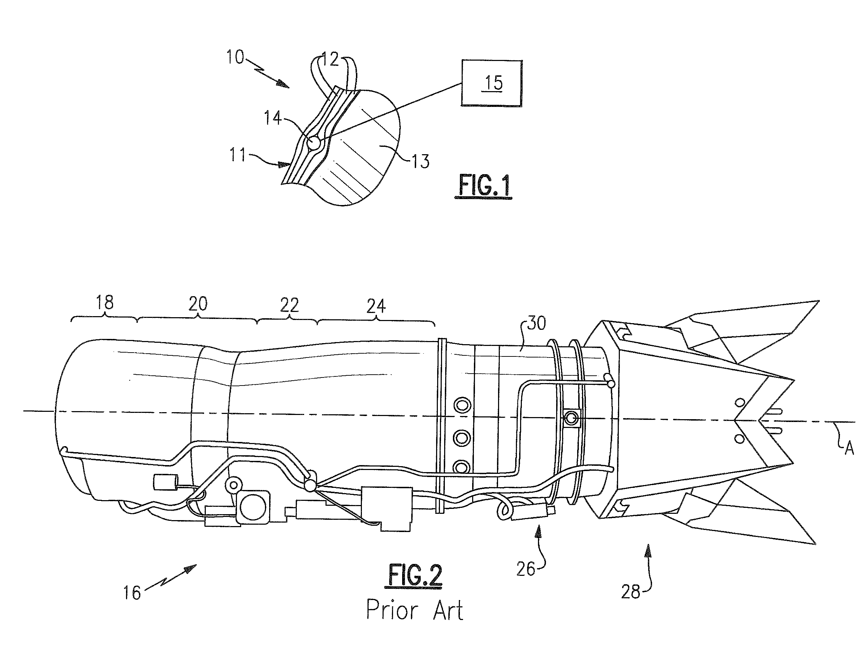

A composite structure 10 is schematically depicted in Figure 1. The composite structure 10 includes a structural member 11 having multiple composite layers 12 secured to one another. The structural member 11 may be a gas turbine engine duct, housing or airframe component, such as a fuselage, floor, wall or overhead bin, that typically generally extends longitudinally to provide a longitudinally extending cavity 13 within which other components are installed. In one example, the cavity 13 is generally cylindrical in shape.

The composite layers 12 include high strength fibers, such as carbon fibers, embedded in an organic matrix or resin, for example. A conveyance element 14, such as wires, air ducts, cables, fiber optics, conduits or hydraulic lines are embedded within or formed in the composite structure 10 in any desired orientation during the manufacturing process to integrate the conveyance element 14 with the structural member 11. A system 15 is connected to the conveyance element 14 such that the conveyance element 14 integrated with the structural member 11 communicates with the system 15.

In one example, one type of gas turbine engine 16 is illustrated in Figure 2. The engine 16 includes a fan section 18, a compressor section 20, a combustor section 22, and a turbine section 24. An augmenter section 26 is arranged between the turbine section 24 and a nozzle 28. The augmenter section 26 includes an engine duct 30, which is a composite structure in the example. It should be understood, however, that the engine duct 30 also includes core or fan cases and nacelles. As shown in Figure 2, typically the engine duct 30 includes wiring harnesses, fluid conduits and other components secured to and support by the engine duct 30.

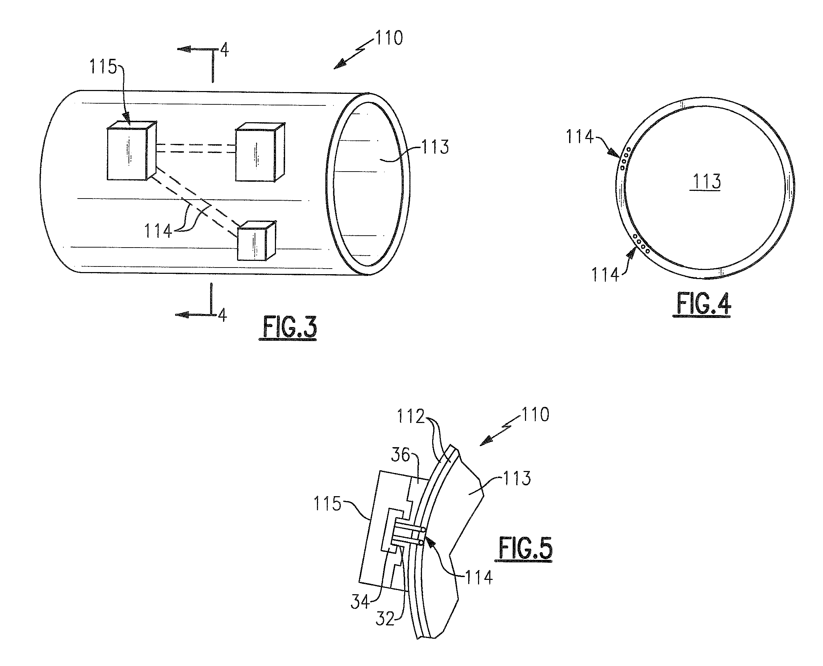

An alternate design for an engine duct is illustrated in more detail in Figures 3-5 as the composite structure 110 with one or more internally embedded conveyance elements 114. The composite structure 110 forms a cavity 113 that provides a cooling duct about a hot section of the augmenter, in one application. In the example, the conveyance element 114 corresponds to wires or fiber optics embedded between composite layers 112 of the composite structure 110. In one example, the wires 114 are bare and do not have any separate insulation such that the composite layers 112 serve as the insulation for the wires 114. The wires 114 extend through an exterior surface of the structural member 112, as best shown in Figure 5. The wires 114 (multiple wires may be used for each electrical connection to provide redundancy) are in electrical communication with a first connector 32, which is part of a mount 36 secured to the exterior of the composite structure 110. A system 115 having a second connector 34 is secured to a mount 36 and connected to the first connector 32 in the example.

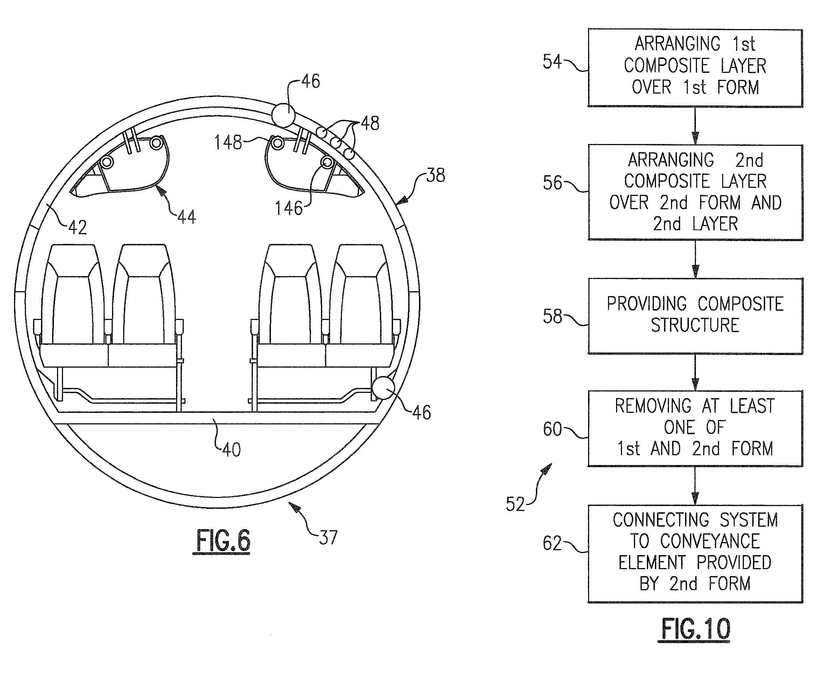

An airframe component 37 is illustrated in Figure 6. The airframe component 37 may include multiple composite structures, such as a fuselage 38 having a floor 40 and a wall 42. Overhead bins 44 are secured to the fuselage 38 and may also be constructed from composite materials. The fuselage 38 and overhead bin 44 may include integrated ducts 46, 146 or conduits 48, 148.

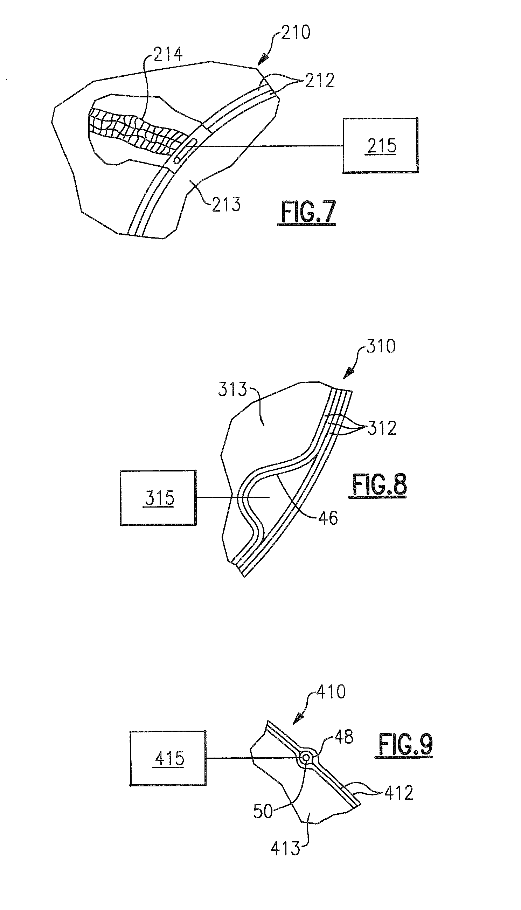

Referring to Figure 7, a composite structure 210 corresponding to a fuselage includes multiple composite layers 212. A conveyance element 214, such as wire mesh, is arranged between the composite layers 212. The wire mesh provides structural reinforcement as well as redundant electrical paths. The fuselage 210 forms an interior cavity 213 for passengers and/or cargo. A system 215 is in communication with the wire mesh 214.

Referring to Figure 8, the composite structure 310, which corresponds to a fuselage wall providing an interior cavity, includes multiple layers 312 that form an air duct 46. An aircraft HVAC system 315 is connected to the air duct 46. The air duct 46 may be formed by arranging a form between the layers 312 during manufacturing. The air duct 46 may also act as a reinforcing rib.

Figure 9 illustrates a composite structure 410, such as a fuselage having an interior cavity 413, includes an integrated conduit 48 formed between the multiple layers 412. Fiber optic cable 50 or wires may be run through the conduit 48. A communication system 415 is connected to the fiber optic cable 50.

A method of manufacturing a composite structural assembly 52 is illustrated in Figure 10. A first composite layer is arranged over a first form, such as a mandrel, as indicated in block 54. The mandrel provides the interior cavity for an engine or airframe. A second form, such as a conveyance element, is positioned over the first layer, as indicated at block 56. A second composite layer is arranged over the second form and the second layer to integrate the conveyance element with the composite structure. The layers of composite material and the conveyance element are integrated with one another to provide a composite structure, as indicated at block 58. At least one of the first and second forms is removed, as indicated at block 60. For example, a mandrel used to form an air duct or conduit is removed. A system is connected to and in communication with the conveyance element provided by the second form, as indicated at block 62.

Although an example embodiment has been disclosed, a worker of ordinary skill in this art would recognize that certain modifications would come within the scope of the claims. For that reason, the following claims should be studied to determine their true scope and content.

## Claims

1. A composite structure (10;110;210;310;410) for aerospace applications comprising:
a structural member including multiple composite layers (12;112;212;312;412) providing an longitudinally extending cavity (13;113;213;313;413);
a conveyance element (14;114;214;314;50) arranged between and integral with the layers (12;112;212;312;412).

2. The composite structure (10;110;210;410) according to claim 1, wherein the composite layers (12;112;212;312;412) comprise resin and carbon fibers.

3. The composite structure (110) according to claim 1 or 2, wherein the structural member provides a gas turbine engine duct (30).

4. The composite structure (110) according to claim 3, wherein the conveyance element (114) includes a wire extending through an exterior surface of the structural member, and a first connector (32) is mounted to the exterior surface and electrically connected to the wire (114).

5. The composite structure (110) according to claim 4, comprising a component supported by the structural member and including a second connector (34), the second connector (34) coupled with the first connector (32) with the component in a mounted position relative to the structural member.

6. The composite structure (210;310;410) according to claim 1 or 2, wherein the structural member includes an airframe component (37).

7. The composite structure (210;310;410) according to claim 6, wherein the airframe (37) component is one of a fuselage (38), a floor (40), a wall (42), and an overhead bin (44).

8. The composite structure (210;310;410) according to claim 6 or 7, wherein the conveyance element is one of a wire (214), an air duct (46) and a conduit (48).

9. The composite structure (210) according to any preceding claim, wherein the conveyance element (214) is woven conductive wire.

10. The composite structure (10;110;210;310;410) according to any preceding claim, wherein the structural member is generally cylindrical in shape with the cavity (13;113;213;413) interiorly located.

11. A method of manufacturing a composite structural assembly (10;110;210;310;410) comprising:
laying a first composite layer (12;112;212;312;412) on a first form that corresponds to a cavity (13;113;213;313;413);
positioning a second form along the first layer (12;112;212;312;412); and
laying a second composite layer (12;112;212;312;412) on the first composite layer and the second form to provide a composite structural member with an integrated conveyance element (14;114;214;314;50).

12. The method according to claim 11, wherein the composite structural member is generally cylindrical in shape with longitudinally extending cavity (13;113;213;313;413) and comprising the step of connecting a system (15;115;215;315;415) in communication with and to the conveyance element (14; 114;214;314;50).

13. The method according to claim 11 or 12, comprising the step of arranging the composite structural member over at least one of a fan section (18), a compressor section (20), a combustor section (22), a turbine section (24) and an augmenter section (26) of a gas turbine engine (16).

14. The method according to any of claims 11 to 13, wherein the second form is a conveyance element that is one of a wire (114), a cable, an air duct (46) and a conduit (48).

15. The method according to any of claims 11 to 14, wherein the composite structural member is an airframe component (37), comprising the step of assembling the airframe component (37) to produce one of a fuselage (38), a floor (40), a wall (42), and an overhead bin (44).
